# EUROPÄISCHE PATENTSCHRIFT

(11) **EP 0 931 358 B1**
(45) Veröffentlichungstag und Bekanntmachung des Hinweises auf die Patenterteilung: **27.02.2002**
(21) Anmeldenummer: 97941855.5
(22) Anmeldetag: 29.08.1997
(51) Int. Cl.: H01L 41/09

(54) **STELLER MIT EINEM AKTOR MIT STEUERBARER LÄNGE UND VORRICHTUNG ZUR ÜBERTRAGUNG DER AUSLENKUNG EINES AKTORS**
CONTROL ELEMENT WITH A CONTROLLABLE LENGTH ACTUATOR AND DEVICE FOR THE TRANSMISSION OF THE DISPLACEMENT OF THE ACTUATOR
ORGANE DE REGLAGE COMPORTANT UN ACTIONNEUR A LONGUEUR REGLABLE ET DISPOSITIF POUR LA TRANSMISSION DU DEPLACEMENT D'UN ACTIONNEUR

(30) Priorität: 30.09.1996 DE 19640264
(43) Veröffentlichungstag der Anmeldung: 28.07.1999
(60) Teilanmeldung: 00101364.8
(73) Patentinhaber: SIEMENS AKTIENGESELLSCHAFT, 80333 München (DE)
(72) Erfinder: KLÜGL, Wendelin, D-92358 Seubersdorf (DE); FITZNER, Johannes, D-93170 Bernhardswald (DE); GIAVI, Raimondo, D-80802 München (DE); KIRCHWEGER, Karl, D-93057 Regensburg (DE); RINK, Jürgen, D-92442 Wackersdorf (DE); SCHMUTZLER, Gerd, D-93138 Kareth (DE); LEHMANN, Stefan, D-93053 Regensburg (DE); BARANOWSKI, Dirk, D-93059 Regensburg (DE); LEWENTZ, Günter, D-93055 Regensburg (DE); KRÜGER, Hinrich, D-93053 Regensburg (DE)
(86) Internationale Anmeldenummer: DE9701895
(87) Internationale Veröffentlichungsnummer: WO9815018

(56) Entgegenhaltungen:
- EP-A- 0 535 510
- DE-A- 3 713 697
- DE-C- 4 407 962

## Beschreibung

Die Erfindung betrifft einen Steller mit einem Aktor gemäß dem Oberbegriff des Patenanspruchs 1.

Ein Steller mit einem piezoelektrischen Aktor wird in der Kraftfahrzeugtechnik z.B. zum Öffnen eines Einspritzventiles einer Brennkraftmaschine verwendet, wobei die Längsbewegung des piezoelektrischen Aktors über eine entsprechende Anordnung auf ein zugeordnetes Ventilschließglied übertragen wird, das die Rückseite einer druckbelasteten Düsennadel entlastet und so ein gezieltes Öffnen bzw. Schließen der Einspritzdüse ermöglicht.

Aus GB 21 93 386 A ist ein piezoelektrischer Aktor bekannt, der an einer Membran anliegt, die mit Teilen eines Ventilgehäuses und einem in einer Führungsbohrung beweglich angeordneten Stößel eine Druckkammer begrenzt, die mit Hydraulikflüssigkeit gefüllt ist. Durch die Membran ist der piezoelektrische Aktor vor einer Benetzung mit der Hydraulikflüssigkeit geschützt. Die Membran ist im wesentlichen senkrecht zur Auslenkungsrichtung des piezoelektrischen Aktors angeordnet und seitlich im Ventilgehäuse befestigt.

Eine weitere Ausführung schützt auch den Stößel vor einem Benetzen mit der Hydraulikflüssigkeit. Dabei wird die Druckkammer durch einen ersten Faltenbalg begrenzt, der einen plattenförmigen Teil aufweist, an dem der piezoelektrische Aktor anliegt, und der im wesentlichen senkrecht zur Bewegungsrichtung des piezoelektrischen Aktors verläuft und mit dem Ventilgehäuse dicht verbunden ist. Weiterhin ist der in einer Führungsbohrung beweglich angeordnete Stößel ebenfalls über einen zweiten Faltenbalg, der senkrecht zur Bewegungsrichtung des Stößels innerhalb der Führungsbohrung angeordnet ist, mit dem Ventilgehäuse derart verbunden, daß der erste Faltenbalg und der zweite Faltenbalg eine Druckkammer gefüllt mit Hydraulikflüssigkeit bilden, wobei der piezoelektrische Aktor und der Stößel vor einer Benetzung mit der Hydraulikflüssigkeit geschützt sind.

Die Aufgabe der Erfindung besteht darin, die Auslenkung eines Aktors auf einen Stößel zu übertragen, wobei der Stößel und der Aktor vor einer Benetzung mit einer Arbeitsflüssigkeit geschützt sind und eine definierte Bewegung des Stößels in der Führungsbohrung gewährleistet ist.

Die Aufgabe der Erfindung wird durch die Merkmale des Anspruchs 1 gelöst.

Ein Steller hat einen Aktor mit steuerbarer Länge, der in einem Gehäuse untergebracht ist,
mit einem in einem Führungskanal geführten Stößel,
mit einer Druckkammer, die zwischen dem Aktor und dem Stößel angeordnet ist,
die mit einem Arbeitsmedium gefüllt ist,
die mindestens von einer ersten und einer zweiten quer zur Längsrichtung des Aktors angeordneten Membran begrenzt wird, wobei die erste Membran dem Aktor und die zweite Membran dem Stößel in der Weise zugeordnet sind,
daß eine Auslenkung des Aktors über die erste Membran, das Arbeitsmedium und die zweite Membran zu einer Verschiebung des Stößels führt,
daß die Flächen der ersten und der zweiten Membran gleich groß sind, und
daß die effektive Fläche der zweiten Membran kleiner ist als die effektive Fläche der ersten Membran, wobei mit effektiver Fläche die Fläche bezeichnet ist, mit der die erste bzw. die zweite Membran auslenkbar ist, und die effektive Fläche der zweiten Membran insbesondere durch den Durchmesser des Führungskanals vorgegeben ist.

Ein wesentlicher Vorteil der Erfindung beruht darin, daß der Stößel in der Führungsbohrung in seiner Bewegung nicht von einem Faltenbalg behindert wird, so daß der Stößel auf die Dimension der Führungsbohrung präzise abstimmbar ist und dadurch Verkantungen beim Bewegen des Stößels sicher vermieden werden.

Weiterhin ist es von Vorteil, eine kompakte Übertragungsvorrichtung vorzusehen, die getrennt von einem Gehäuse fertigbar ist und die auf einfache Weise im Gehäuse montierbar ist.

Vorteilhafte Ausbildungen und Verbesserungen der Erfindung sind in den Unteransprüchen angegeben.

Die Erfindung wird anhand der Figuren näher erläutert; es zeigen:
- Figur 1: schematisch einen Teil eines Hydraulikventils,
- Figur 2: eine ausgelenkte erste und zweite Membran,
- Figur 3: einen Teil eines Hydraulikventils mit einer Übertragungsvorrichtung,
- Figur 4: eine Übertragungsvorrichtung,
- Figur 5: eine Druckkammer mit Füllstück,
- Figur 6: zwei gleich große Membrane,
- Figur 7: zwei gegeneinander geneigte Membrane, und
- Figur 8: zwei seitlich versetzte Membrane.

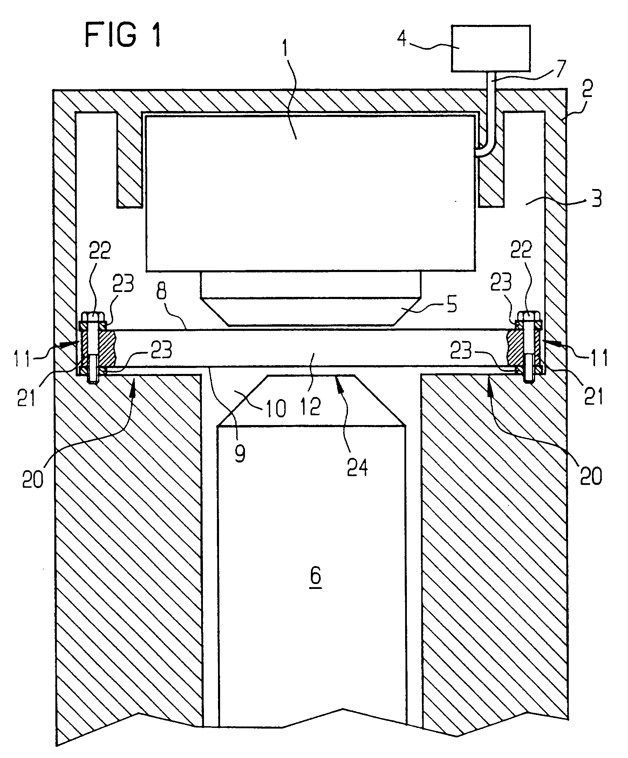

Figur 1 zeigt schematisch einen Teil eines Hydraulikventils, das beispielsweise für die Ansteuerung eines Einspritzventils verwendet wird. In einer Aktorkammer 3 des Ventilgehäuses 2 ist ein Aktor, insbesondere ein piezoelektrischer Aktor 1, vorgesehen, der über Ansteuerleitungen 7 mit einem Ansteuermittel 4 verbunden ist. Der piezoelektrische Aktor 1 weist eine Druckplatte 5 auf, die an einer ersten Membran 8 anliegt, wobei in einem vorgegebenen Abstand zur ersten Membran 8 eine zweite Membran 9 angeordnet ist. Die erste und die zweite Membran 8, 9 sind über Befestigungsmittel 11 im Randbereich dicht abgeschlossen und zugleich auf einer ringförmig umlaufenden Lagerkante 20 fest mit dem Ventilgehäuse 2 verbunden. Die erste und die zweite Membran 8, 9 begrenzen eine Druckkammer 12, die mit einem flüssigen oder pastösem Arbeitsmedium gefüllt ist, das vorzugsweise unter einem vorgegebenen Druck steht. Die erste und die zweite Membran 8, 9 sind beispielsweise als kreisförmige Federstahlplatten ausgebildet, wobei die erste Membran 8 vorzugsweise eine größere Federsteifigkeit als die zweite Membran 9 aufweist.

Im Randbereich der ersten und zweiten Membran 8, 9 ist zwischen der ersten und zweiten Membran 8, 9 umlaufend ein Abstandsring 21 vorgesehen, der den Abstand zwischen der ersten und zweiten Membran 8, 9 vorgibt. Die erste und zweite Membran 8, 9 sind über Schrauben 22 und über ringförmige Abdeckplatten 23 dicht an den Abstandsring 21 gepreßt, so daß die Druckkammer 12 dicht abgeschlossen ist.

Die dichte Verbindung zwischen der ersten und der zweiten Membran 8,9 bzw. die feste Verbindung zwischen der ersten und der zweiten Membran und dem Ventilgehäuse 2 kann beispielsweise als Schraub-, Klemm- oder Schweiß-Konstruktion ausgeführt sein.

Vorzugsweise ist symmetrisch zur Anordnung des piezoelektrischen Aktors 1 in das Ventilgehäuse 2 ein Führungskanal 10 eingebracht, der beispielsweise als Führungsbohrung 10 ausgebildet ist. Die Führungsbohrung 10 ist bis zur zweiten Membran 9 geführt und mündet in die Aktorkammer 3. In der Führungsbohrung 10 ist ein in Längsrichtung der Führungsbohrung 10 beweglicher Stößel 6 eingebracht, der mit seiner oberen Druckfläche 24 der zweiten Membran 9 zugeordnet ist, vorzugsweise an der zweiten Membran 9 anliegt. Der Stößel 6 stellt ein bewegliches Teil dar, auf das die Bewegung des Aktors 1 übertragen wird. Der Stößel 6 steht in Wirkverbindung mit einem Schließglied, das in Abhängigkeit von der Stellung des Stößels 6 den Rückraum einer Einspritznadel von Druck entlastet und dadurch die Einspritznadel von einem zugeordneten Ventilsitz abgehoben wird und ein Einspritzvorgang beginnt.

Das in der Druckkammer 12 befindliche Arbeitsmedium weist vorzugsweise eine möglichst geringe Kompressibilität auf, die beispielsweise von einem entsprechenden Hydrauliköl erfüllt wird. Weiterhin ist es von Vorteil, ein Arbeitsmedium mit einem großen Wärmeausdehnungskoeffizienten zu verwenden, um die unterschiedlichen Wärmeausdehnungskoeffizienten des Ventilgehäuses 2 und des Aktors 1 ausgleichen zu können. Die Befüllung der Druckkammer 12 mit einem Arbeitsmedium, das unter einem vorgegebenen Druck steht, bietet den Vorteil, daß Inhomogenitäten im Arbeitsmedium, wie beispielsweise Gasblasen, verhindert werden, so daß eine direkte und verlustfreie Druckübertragung von der Druckplatte 5 zur zweiten Membran 9 gewährleistet ist. Weiterhin bietet ein unter Druck stehendes Arbeitsmedium den Vorteil, die erste Membran 8 in Richtung auf den Aktor 1 vorzuspannen, so daß eine weitere Feder zur Vorspannung des Aktors 1 entfallen kann.

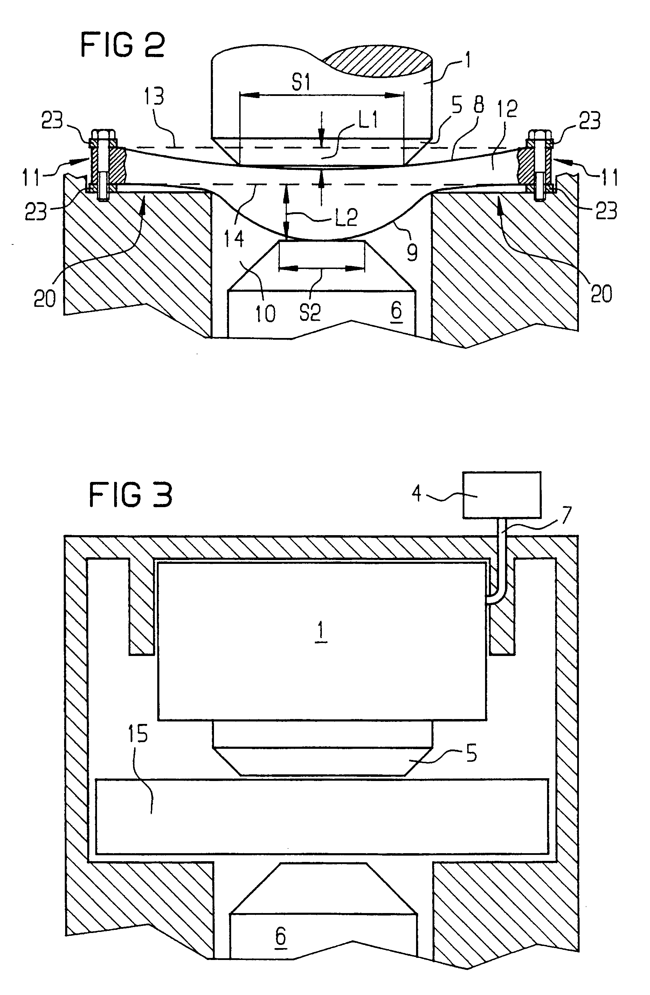

Die Wirkung der Anordnung der Figur 1 wird im folgenden anhand der Figur 2 näher erläutert. Figur 2 zeigt einen um eine erste Strecke L1 in Richtung auf die erste Membran 8 verlängerten piezoelektrischen Aktor 1, der durch seine Auslenkung die erste Membran 8 in Richtung auf den Stößel 6 drückt, so daß die erste Membran 8 in Richtung auf den Stößel 6 durchgebogen ist. In Figur 2 ist die Ausgangslage 13 der ersten Membran 8, die der Position der ersten Membran 8 der Figur 1 entspricht, und die Ausgangslage 14 der zweiten Membran 9, die der Position der zweiten Membran 9 der Figur 1 entspricht, gestrichelt eingezeichnet.

Da die Druckkammer 12 mit einem Arbeitsmedium gefüllt ist, das eine geringe Kompressibilität aufweist, wird durch die Auslenkung der ersten Membran 8 die zweite Membran 9 in Richtung auf den Stößel 6 um eine zweite Strecke L2 ausgelenkt, so daß der Stößel 6 um die zweite Strecke L2 weg vom piezoelektrischen Aktor 1 bewegt wird.

Die zweite Membran 9 kann sich nicht über ihre gesamte Fläche auslenken, da die zweite Membran 9 im Randbereich auf der Auflagekante 20 aufliegt. Die effektive Fläche, über die sich die zweite Membran 9 auslenken kann, wird durch den Querschnitt der Führungsbohrung 10 vorgegeben. Da die Führungsbohrung 10 im Querschnitt kreisförmig ausgebildet ist, wird im folgenden anstelle der effektiven Fläche, über die die zweite Membran 9 auslenkbar ist, der effektive Radius betrachtet, da die effektive Fläche proportional zum effektiven Radius ist. Die Fläche, mit der die zweite Membran 9 ausgelenkt werden kann, ist kleiner als die Fläche, mit der die erste Membran 8 ausgelenkt wird. Deshalb ist die zweite Strecke L2 entsprechend länger als die erste Strecke L1, da das durch die erste Membran 8 verschobene Volumen des Arbeitsmediums durch die Auslenkung der zweiten Membran 9 ausgeglichen wird, wenn das Arbeitsmedium inkompressibel ist.

Das Verhältnis zwischen der ersten Auslenkung L1 und der zweiten Auslenkung L2 ist unter anderem eine Funktion von der auslenkbaren Fläche der ersten Membran 8 und der auslenkbaren Fläche der zweiten Membran 9. Bei dem beschriebenen Ausführungsbeispiel weisen die erste und die zweite Membran 8,9 eine Kreisfläche auf, so daß die auslenkbare Fläche der ersten bzw. der zweiten Membran 8,9 proportional zum effektiven Durchmesser der ersten bzw. der zweiten Membran sind. Damit ist das Verhältnis der ersten Auslenkung L1 zur zweiten Auslenkung L2 proportional zum Verhältnis des zweiten effektiven Durchmessers D2 zum ersten effektiven Durchmesser D1.

In Figur 1 und Figur 2 entspricht der effektive Durchmesser D1 der ersten Membran 8 dem tatsächlichen Durchmesser der ersten Membran 8 und der effektive Durchmesser D2 der zweiten Membran 9 dem Durchmesser der Führungsbohrung 10, der kleiner ist als der tatsächliche Durchmesser D1 der ersten Membran 8. Dadurch, daß der effektive Durchmesser der zweiten Membran 9 kleiner ist als der effektive Durchmesser der ersten Membran 8, wird eine geringe Auslenkung des piezoelektrischen Aktors 1 in eine größere Auslenkung des Stößels 6 umgesetzt.

Weiterhin ist das Verhältnis der ersten zur zweiten Auslenkung eine Funktion von den Durchmessern der Flächen, mit denen die Druckplatte 5 bzw. der Stößels 6 an der ersten bzw. zweiten Membran 8,9 anliegen. Die Druckplatte 5 und der Stößel 6 weisen anliegend an die erste bzw. die zweite Membran jeweils eine kreisförmige Fläche mit einem ersten Durchmesser S1 bzw. einem zweiten Durchmesser S2 auf. Dadurch wird die Biegelinie der ersten bzw. der zweiten Membran 8,9 durch die Druckplatte 5 bzw. den Stößel 6 mindestens teilweise vorgegeben und damit auch die Auslenkung L1, L2 der ersten bzw. der zweiten Membran 8,9 beeinflußt. Das Verhältnis des ersten Durchmessers S1 der Druckplatte 5 zum zweiten Durchmesser S2 des Stößels 6 ist proportional dem Verhältnis der zweiten Auslenkung L2 der zweiten Membran 9 zur ersten Auslenkung L1 der ersten Membran 8.

Eine bevorzugte Ausführung der ersten und der zweiten Membran 8,9 besteht darin, die erste und zweite Membran 8, 9 mindestens teilweise aus einem gewebeverstärkten Kunststoff, vorzugsweise aus Elastomer zu fertigen.

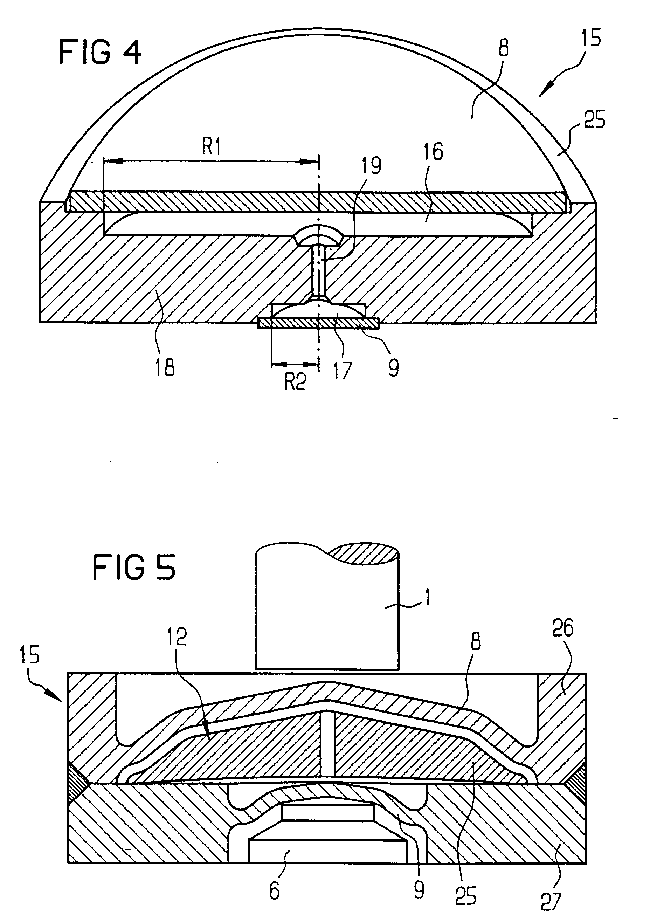

Figur 3 zeigt den schematischen Aufbau einer weiteren wesentlichen Ausführungsform der Erfindung, die darin besteht, die Übertragung der Auslenkung des Aktors 1 auf den Stößel 6 in Form einer einstückigen Übertragungsvorrichtung 15 darzustellen, die zwischen der Druckplatte 5 und dem Stößel 6 auf der Auflagekante 20 des Ventilgehäuses 2 aufliegt. Der wesentliche Aufbau der Figur 3 entspricht dem Aufbau der Figur 1, so daß im folgenden anhand der Figur 4 nur die Übertragungsvorrichtung 15 näher beschrieben wird.

Figur 4 zeigt eine einstückige Übertragungsvorrichtung 15 im Querschnitt, die ein scheibenförmiges, aus Metall gefertigtes, Trägerteil 18 aufweist, aus dem von der Oberseite her eine erste, scheibenförmige Ausnehmung 16 herausgearbeitet ist, wobei ein ringförmig umlaufender Steg 25 die erste Ausnehmung 16 seitlich begrenzt. Über der Ausnehmung 16 ist die erste Membran 8 angeordnet, die umlaufend dicht mit dem Steg 25 verbunden ist.

In das Trägerteil 18 ist von der Unterseite her eine zweite Ausnehmung 17 eingebracht, die dicht mit der zweiten Membran 9 abgeschlossen ist. Die zweite Membran 9 ist auf einer ringförmig umlaufenden Fläche dicht mit dem Trägerteil 18 verbunden. Die erste und die zweite Ausnehmung 16, 17 sind über eine in das Trägerteil 118 eingebrachte Verbindungsleitung 19 miteinander verbunden und stellen somit eine abgeschlossene Druckkammer 12 dar.

Die erste und die zweite Membran 8,9 sind vorzugsweise kreisförmig ausgebildet, wobei die Fläche bzw. der Radius R1 der ersten Membran 8 größer als die Fläche bzw. der Radius R2 der zweiten Membran 9 ist. Die Federsteifigkeit der zweiten Membran 9 ist vorzugsweise kleiner als die Federsteifigkeit der ersten Membran 8, damit bei einer zur Verfügung stehenden, begrenzten Kraft des Aktors 1 eine entsprechend große zweite Auslenkung L2 der zweiten Membran 9 erzeugt wird, wenn die erste Membran 8 in Richtung auf die erste Ausnehmung 16 vom piezoelektrischen Aktor 1 ausgelenkt wird.

Das Volumen in der Druckkammer 12 zwischen den beiden Membranen 8, 9 sollte möglichst klein sein, um eine große hydraulische Steifigkeit zu erreichen.

Weiterhin ist es von Vorteil, das Arbeitsmedium in der Druckkammer 12 mit einem vorgegebenen Druck zu versehen, so daß die erste und zweite Membran 8, 9 in Richtung auf den piezoelektrischen Aktor 1 bzw. den Stößel 6 gewölbt ist und damit der Aktor 1 bzw. der Stößel 6 entsprechend vorgespannt sind, so daß keine zusätzlichen Federn zur Vorspannung insbesondere des Aktors 1 notwendig sind.

Die Anordnung der Figur 4 funktioniert entsprechend dem Prinzip der Figur 2. Eine geringe Auslenkung der ersten Membran 8 drückt aufgrund des großen Radius R1 ein großes Volumen an Arbeitsmedium von der ersten Ausnehmung 16 über die Verbindungsleitung 19 in die zweite Ausnehmung 17. Die zweite Membran 9 wird entsprechend weiter ausgelenkt, da der Radius R2 der zweiten Membran 9 kleiner ist als der Radius R1 der ersten Membran 8.

Der Durchmesser der Verbindungsleitung 19 ist vorzugsweise so zu dimensionieren, daß keine beeinträchtigende Drosselwirkung auftritt, wenn das Arbeitsmedium durch die Verbindungsleitung 19 gedrückt wird.

Die Übersetzungsvorrichtung 15 der Figur 4 bietet den besonderen Vorteil, daß nur ein geringer Montageaufwand zur Einbringung in das Ventilgehäuse 2 notwendig ist, da die Übersetzungsvorrichtung 15 bereits fertig vormontiert ist. Weiterhin gibt es aufgrund der erfindungsgemäßen Vorrichtung keine Leckagen, so daß ein maximal möglicher Wirkungsgrad bei der Übersetzung der Auslenkung des piezoelektrischen Aktors 1 auf den Stößel 6 erreicht wird.

Zudem wird aufgrund der besonderen Form der ersten und zweiten Membran 8,9, die im wesentlichen senkrecht zur Auslenkungsrichtung des piezoelektrischen Antriebs 1 angeordnete Platten darstellen, eine hohe hydraulische Steifigkeit erreicht.

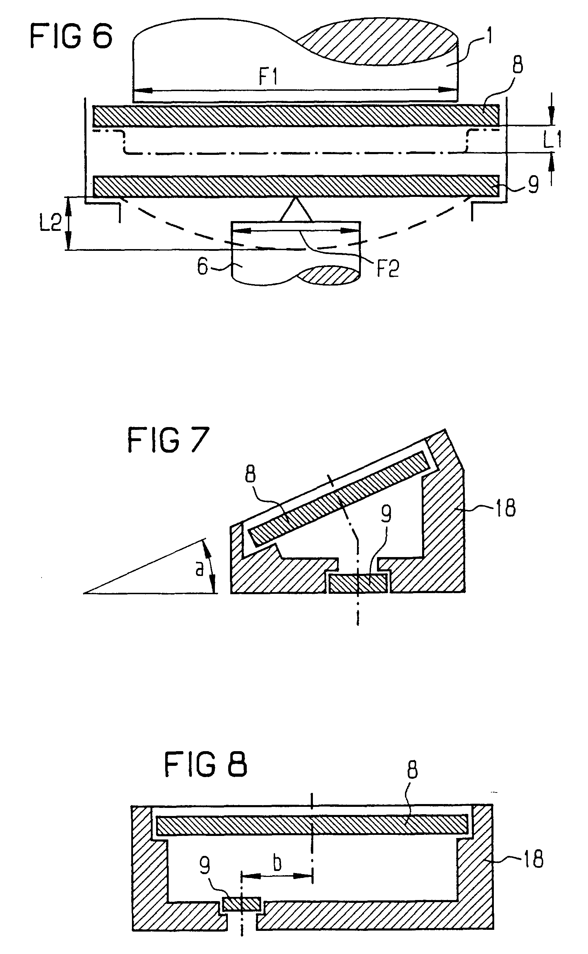

Figur 5 zeigt im Querschnitt den Aufbau einer spannungsoptimierten Übertragungsvorrichtung 15, bei der die erste und die zweite Membran 8,9 in Richtung auf den Aktor 1 gewölbt und dadurch vorgespannt sind. Die erste und die zweite Membran 8,9 weisen jeweils einen umlaufenden, verstärkten Tragring 26, 27 auf, von dem ausgehend die erste bzw. die zweite Membran 8,9 ausgebildet ist, so daß die erste bzw. die zweite Membran 8,9 mit dem entsprechenden Tragring 26,27 als ein einziges Bauteil ausgebildet sind. Durch die entsprechende Breite des Tragringes 26,27 wird der Durchmesser der entsprechenden Membran 8,9 festgelegt. Die Verbindung zwischen der ersten und der zweiten Membran wird dabei zwischen den Tragringen 26,27 hergestellt, die beispielsweise miteinander dicht verschraubt oder verklebt sind. Dadurch ist sichergestellt, daß die Verbindung zwischen der ersten und der zweiten Membran 8,9 außerhalb der Membran 8,9 und außerhalb des Anschlußbereiches, in dem die Membran 8,9 an den Tragring 26,27 anschließt, vorgesehen ist.

In der Druckkammer 12 ist vorzugsweise ein Füllstück 25 eingebracht, das vorzugsweise der Druckkammer 12 nachgebildet ist und einen Teil der Druckkammer 12 ausfüllt. Die Verbindungsleitung 19 ist ebenfalls vorzugsweise im Füllstück 12 eingearbeitet. Vorzugsweise ist das Füllstück 25 fest in der Druckkammer 12 angeordnet und teilt die Druckkammer 12 in zwei Kammern auf, wobei eine Kammer mindestens teilweise von der ersten Membran 8 und die zweite Kammer mindestens teilweise von der zweiten Membran 9 begrenzt wird. Das Füllstück 25 ist aus einem inkompressiblen Material, vorzugsweise Metall, gefertigt.

Durch die Einbringung des Füllstückes wird die Geometrie der ersten und der zweiten Membran 8,9 unabhängig von der Anforderung, die Druckkammer 12 so klein wie möglich zu gestalten, damit die Kompressibilität zwischen der ersten und der zweiten Membran 8,9 so klein wie möglich gehalten wird. Auf diese Weise kann die erste und die zweite Membran 8,9 spannungsoptimiert ausgelegt werden. Die Druckkammer 12 wird vorzugsweise aus drei getrennt hergestellten Teilen hergestellt, wobei ein erstes Teil die erste Membran 8, ein zweites Teil die zweite Membran 9 und ein drittes Teil das Füllstück 25 aufweist.

Das Füllstück 25 ist vorzugsweise so ausgebildet, daß es näherungsweise die Wölbung der ersten und/oder der zweiten Membran 8,9 nachbildet, wobei jedoch ein entsprechender Abstand zwischen dem Füllstück 25 und der ersten bzw. der zweiten Membran vorgesehen ist, daß die Auslenkung der ersten und zweiten Membran 8,9 nicht behindert wird. Die erste Membran 8, die zweite Membran 9 und das Füllstück 25 werden jeweils getrennt hergestellt und anschließend miteinander verbunden.

Ein bevorzugtes Verfahren zur Herstellung der Übersetzungsvorrichtung 15 ist das Metallspritzgießen mit einer Mischung aus pulverisiertem Metall und bis zu 50% Kunststoffanteil, mit dem eine Vielzahl von verschiedenen Formen und Geometrien der Übersetzungsvorrichtung 15 herstellbar sind.

Ein bevorzugtes Material zur Herstellung der Übersetzungsvorrichtung 15 ist ein faserverstärktes Material, vorzugsweise faserverstärkter Kunststoff, der entsprechend geformt wird.

Figur 6 zeigt schematisch eine bevorzugte Ausführungsform, bei der die erste und die zweite Membran 8,9 gleich groß gewählt sind, aber die Flächen, mit denen der Aktor 1 und der Stößel 6 an der ersten bzw. der zweiten Membran 8,9 anliegen unterschiedlich groß sind, so daß aufgrund der größeren Fläche F1, mit der der Aktor 1 die erste Membran 8 um eine erste Strecke L1 auslenkt, die zweite Membran 9 um eine größere zweite Strecke L2 auslenkt, so daß eine Übersetzung der Auslenkung des Aktors 1 auf den Stößel 6 über die unterschiedlich großen erste und zweite Fläche F1,F2 erreicht wird.

Figur 7 zeigt eine weitere Ausführungsform, bei der die zweite Membran 9 nicht parallel zur ersten Membran 8 ausgebildet ist, so daß eine Umlenkung der Bewegungsrichtung des Aktors 1 auf eine beliebige Bewegungsrichtung des Stößels 6 möglich ist, obwohl die erste und die zweite Membran 8,9 vorzugsweise plane, plattenförmige Membranen 8,9 darstellen. Die zweite Membran 9 kann in einem beliebigen Winkel a zur ersten Membran 8 ausgerichtet sein.

Figur 8 zeigt eine weitere Ausbildung der Erfindung, wobei die erste und die zweite Membran 8,9 parallel zueinander und seitlich gegeneinander um einen Abstand b versetzt angeordnet sind, so daß die Auslenkungsrichtung des Aktors 1 und die Bewegungsrichtung des Stößels 6 parallel und seitlich versetzt zueinander angeordnet sind.

## Patentansprüche

1. Steller mit einem Aktor (1) mit steuerbarer Länge, der in einem Gehäuse (2) untergebracht ist,
- mit einem in einem Führungskanal (10) geführten Stößel (6),
- mit einer Druckkammer (12), die zwischen dem Aktor (1) und dem Stößel (6) angeordnet ist,
-- die mit einem Arbeitsmedium gefüllt ist,
-- die mindestens von einer ersten und einer zweiten quer zur Längsrichtung des Aktors (1) angeordneten Membran (8,9) begrenzt wird, wobei die erste Membran (8) dem Aktor (1) und die zweite Membran (9) dem Stößel (6) in der Weise zugeordnet sind, daß eine Auslenkung des Aktors (1) über die erste Membran (8), das Arbeitsmedium und die zweite Membran (9) zu einer Verschiebung des Stößels (6) führt,
- daß die Flächen der ersten und der zweiten Membran (8,9) gleich groß sind, und
- daß die effektive Fläche der zweiten Membran (9) kleiner ist als die effektive Fläche der ersten Membran (8), wobei mit effektiver Fläche die Fläche bezeichnet ist, mit der die erste bzw. die zweite Membran (8,9) auslenkbar ist, und die effektive Fläche der zweiten Membran (9) durch den Durchmesser des Führungskanals (10) vorgegeben ist.

2. Steller nach Anspruch 1, **dadurch gekennzeichnet,**
- **daß** das Arbeitsmedium in der Druckkammer (12) unter Druck steht und die erste Membran (8) derart ausgebildet ist, daß das Arbeitsmedium eine Kraft auf den Aktor (1) ausübt, die den Aktor (1) gegen seine Auslenkrichtung vorspannt.

3. Steller nach Anspruch 1, **dadurch gekennzeichnet,**
- **daß** das Arbeitsmedium einen Wärmeausdehnungskoeffizienten aufweist, der die unterschiedlichen Wärmeausdehnungskoeffizienten des Aktors (1) und des Gehäuses (2) ausgleicht.

4. Steller nach Anspruch 1, **dadurch gekennzeichnet,**
- **daß** die Fläche der ersten und der zweiten Membran (8,9) gleich groß sind, daß der Aktor (1) mit einer ersten Fläche in Wirkverbindung mit der ersten Membran (8) steht, daß der Stößel (6) mit einer zweiten Fläche in Wirkverbindung mit der zweiten Membran (9) steht, und daß die erste Fläche größer als die zweite Fläche ist.

## Claims

1. Control element having an actuator (1) with controllable length which is accommodated in a housing (2),
- having a tappet (6) which is guided in a guide duct (10),
- having a pressure chamber (12) which is arranged between the actuator (1) and the tappet (6),
- - which is filled with a working medium,
- - which is bounded at least by a first and a second diaphragm (8, 9) arranged transversely with respect to the longitudinal direction of the actuator (1), the first diaphragm (8) being assigned to the actuator (1), and the second diaphragm (9) being assigned to the tappet (6), in such a way that a deflection of the actuator (1) leads to a displacement of the tappet (6) via the first diaphragm (8), the working medium and the second diaphragm (9),
- that the areas of the first and second diaphragms (8, 9) are of equal size, and
- that the effective area of the second diaphragm (9) is smaller than the effective area of the first diaphragm (8), the area with which the first and second diaphragms (8, 9) can be deflected being designated as the effective area, and the effective area of the second diaphragm (9) being predefined by the diameter of the guide duct.

2. Control element according to Claim 1, **characterized**
- **in that** the working medium in the pressure chamber (12) is under pressure, and the first diaphragm (8) is embodied in such a way that the working medium exerts a force on the actuator (1) which prestresses the actuator (1) counter to its direction of deflection.

3. Control element according to Claim 1, **characterized**
- **in that** the working medium has a coefficient of thermal expansion which equalizes the different coefficients of thermal expansion of the actuator (1) and of the housing (2).

4. Control element according to Claim 1, **characterized**
- **in that** the areas of the first and second diaphragms (8, 9) are of equal size, and that the actuator (1) with a first area is actively connected to the first diaphragm (8), and in that the tappet (6) with a second area is actively connected to the second diaphragm (9), and in that the first area is greater than the second area.

## Revendications

1. Organe de réglage comprenant un actionneur (1) de longueur réglable, qui est logé dans un corps (2),
- comprenant un poussoir (6) guidé dans un canal (10) de guidage,
- comprenant une chambre (12) de pression qui est interposée entre l'actionneur (1) et le poussoir (6),
-- qui est emplie d'un milieu de travail,
-- qui est délimitée au moins par une première et une deuxième membranes (8, 9) disposées transversalement à la direction longitudinale de l'actionneur, la première membrane (8) étant associée à l'actionneur (1) et la seconde membrane (9) au poussoir (6) de façon qu'une excursion de l'actionneur (1) au-dessus de la première membrane (8), du milieu de travail et de la seconde membrane (9) provoque un déplacement du poussoir (6),
- en ce que les surfaces des première et seconde membranes (8, 9) sont égales et
- en ce que la surface effective de la seconde membrane (9) est plus petite que la surface effective de la première membrane (8), en désignant par surface effective la surface par laquelle la première ou la seconde membranes (8, 9) peuvent être déviées , et la surface effective de la seconde membrane (9) étant donnée par le diamètre du canal (10) de guidage.

2. Organe de réglage suivant la revendication 1, **caractérisé**
- **en ce que** le milieu de travail dans la chambre (12) de pression est sous pression et la première membrane (8) est constituée de façon que le milieu de travail applique à l'actionneur (1) une force qui met l'actionneur (1) sous tension préalable à l'encontre de sa direction de déplacement.

3. Organe de réglage suivant la revendication 1, **caractérisé**
- **en ce que** le milieu de travail a un coefficient de dilatation thermique qui compense les différences de coefficient de dilatation thermique entre l'actionneur (1) et le corps (2).

4. Organe de réglage suivant la revendication 1, **caractérisé**
- **en ce que** les surface de la première et de la seconde membranes (8, 9) sont égales, en ce que l'actionneur (1) coopère par une première surface avec la première membrane (8), en ce que le poussoir (6) coopère par une seconde surface avec la seconde membrane (9) et en ce que la première surface est plus grande que la seconde surface.
